Europäisches Patentamt

**European Patent Office**

Office européen des brevets

(19)

(11) Veröffentlichungsnummer: **0 126 413**
**B1**

(12) # EUROPÄISCHE PATENTSCHRIFT

(45) Veröffentlichungstag der Patentschrift: **08.08.90**

(21) Anmeldenummer: **84105517.1**

(22) Anmeldetag: **15.05.84**

(51) Int. Cl.⁵: **H 04 L 12/54,** H 04 Q 11/04,
H 04 M 11/06

(54) **Telekommunikationssystem sowohl für Stream-Verkehr als auch für Burst-Verkehr.**

(30) Priorität: **19.05.83 DE 3318290**

(43) Veröffentlichungstag der Anmeldung:
**28.11.84 Patentblatt 84/48**

(45) Bekanntmachung des Hinweises auf die
Patenterteilung:
**08.08.90 Patentblatt 90/32**

(84) Benannte Vertragsstaaten:
**AT BE CH DE FR GB IT LI NL SE**

(56) Entgegenhaltungen:
**EP-A-0 075 998**
**EP-A-0 126 482**
**EP-A-0 127 138**

**ELECTRICAL COMMUNICATIONS, Band 56, Nr.
1, 1981, Seiten 44-56, New York, US; G.
TOLUSSO et al.: "Application of distributed
control to handling non-voice services"**

(73) Patentinhaber: **Siemens Aktiengesellschaft
Wittelsbacherplatz 2
D-8000 München 2 (DE)**

(72) Erfinder: **Gerke, Peter, Dipl.-Ing.
Schiltberger Strasse 1
D-8032 Gräfelfing (DE)**

(56) References cited:
**INTERNATIONAL SWITCHING SYMPOSIUM,
Montreal, CA, 21.-25. September 1981, Seiten
1-8, US; R. MONTEMURRO et al.: "Customer
access to the ISDN facilities"**

**Beschreibung**

In der neueren Telekommunikationstechnik, insbesondere in der Bürokommunikation, treten zwei in ihrer Charakteristik sehr unterschiedliche Kommunikationskategorien auf: Zum einen der sog. Stream-Verkehr mit dem Profil etwa des Fernsprechverkehrs mit Verbindungsdauern in der Größenordnung von Minuten, Bitraten etwa von 64 bzw. 160 kbit/s und relativ geringer Verbindungshäufigkeit; zum anderen der sogenannte Burst-Verkehr mit Kommunikationsdauern in der Größenordnung von Millisekunden, Bitraten etwa von 10 Mbit/s und großer Verbindungshäufigkeit.

Dam Stream-Verkehr, wie er etwa zwischen Geräten zur Sprach-, Text- oder Bildkommunikation stattfindet, ist das Prinzip der Kanalvermittlung adäquat, demzufolge unabhängig vom momentanen Kommunikationszustand ein verbindungsindividueller Übertragungskanal jeweils für die Dauer der betreffenden Verbindung durchgeschaltet wird. Dies erfordert entsprechende Verbindungsaufbau- und -abbauzeiten, die indessen bei einem Burst-Verkehr, wie er etwa zur Verbindung von Subsystemen der Daten- und Textverarbeitung stattfindet, nicht tragbar sind, weshalb hier Prinzipien der Paketvermittlung zur Anwendung kommen: Die Nutzinformationspakete, die jeweils die Zieladresse unmittelbar mit sich führen, werden allen am Anschlußnetz angeschlossenen Einrichtungen zugeführt und nur von der von der jeweiligen Zieladresse bezeichneten Empfängereinrichtung aufgenommen.

Für die erste Kommunikationskategorie, d.h. für Stream-Verkehr, ist das diensteintegrierende digitale Fernmeldenetz (ISDN) optimal geeignet, während für die zweite Kommunikationskategorie, d.h. für Burst-Verkehr, beispielsweise ein sog. Local Area Network (LAN) vorgesehen sein kann. Die Einrichtung zweier Kommunikationsnetze ist allerdings entsprechend aufwendig und kompliziert zugleich auch die Kommunikation insgesamt; wünschenswert ist daher eine Möglichkeit, Telekommunikation beider Verkehrsarten in einem einzigen Anschlußnetz abwickeln zu können, und die Erfindung zeigt hierzu einen Weg.

Die Erfindung betrifft ein Telekommunikationssystem sowohl für sog. Stream-Verkehr, insbesondere zwischen Geräten zur Sprach-, Text- und/oder Bildkommunikation, als auch für sog. Burst-Verkehr, insbesondere zwischen Geräten zur Daten- und/oder Textverarbeitung, mit breitbandigen, insbesondere Lichtwellenleiter-Anschlußleitungen; dieses Telekommunikationssystem ist erfindungsgemäß dadurch gekennzeichnet, daß eine Mehrzahl von Telekommunikationsgeräten für Stream-Verkehr und von Telekommunikationsgeräten für Burst-Verkehr jeweils über eine eigene Anschlußleitung oder auch über eine jeweils eine Mehrzahl solcher Telekommunikationsgeräte zusammenfassende Ring- oder Busanschlußleitung an ein und dieselbe Koppeleinrichtung angeschlossen ist, wobei das Telekommunikationssystem so ausgestaltet ist, daß in der Koppeleinrichtung bei Reservierung wenigstens eines Übertragungskanals auf jeder Anschlußleitung, an die ein oder mehrere Burst-Verkehr-Telekommunikationsgerät(e) angeschlossen ist (sind), ausschließlich für Burst-Verkehrsverbindungen und Belegung ausschließlich solcher reservierter Übertragungskanäle durch Burst-Verkehrsverbindungen alle einem für Burst-Verkehr reservierten Übertrangungskanal zugehörigen Koppeleinrichtungseingänge mit allen einem für Burst-Verkehr reservierten Übertragungskanal zugehörigen Koppeleinrichtungsausgängen permanent verbunden sind, während Verbindungen mit für Stream-Verkehr vorgesehenen Übertragungskanälen zugehörigen Koppeleinrichtungseingängen bzw.-ausgängen ebenso wie Verbindungen zwischen diesen lediglich für die Dauer des jeweiligen Kommunikationsvorgangs durchgeschaltet werden.

Es sei an dieser Stelle bemerkt, daß es (aus Proceedings International Conference on Local Computer Networks, Florenz 1982, S.23 . . . 37) bekannt ist, in einem optischen Ringsystem einen Zeitrahmen in zweit Unterrahmen aufzuteilen, in deren erstem Stream-Verkehr abgewickelt wird, während im zweiten Unterrahmen Datenpakete übertragen werden.

Des weiteren ist (aus der EP—A—0054077) ein Ringsystem ohne rahmensynchrone Zeitschlitzstruktur bekannt, in dem neben einem Burst-Verkehr in eingeschränkter Form auch Stream-Verkehr möglich ist.

Ein anderes (in der deutschen Patentanmeldung DE—A—33 04 823.1 angegebenes) Kommunikationsverfahren für sowohl Stream-Verkehr als auch Burst-Verkehr sieht vor, daß die Signale beider Verkehrsarten über ein mit allen Anschlußstellen verbundenes gemeinsames Übertragungsleitungsbündel in einem in wenigstens zwei Unterrahmen unterteilten Pulsrahmen übertragen werden, wobei im ersten Unterrahmen die von einer Mehrzahl von Zeitfächern gebildeten Einzelkanäle voneinander unabhängig für über das Übertragungsleitungsbündel geführten Stream-Verkehr, insbesondere Sprachkommunikation, belegbar sind, während die Zeitfächer des zweiten Unterrahmens einen einzigen Datenkanal für die Übertragung von Datenpaketen über dasselbe Übertragungsleitungsbündel bilden.

Diese bekannten Verfarhen beziehen sich indessen lediglich auf den Zugriff zu den jeweils aud der Übertragungsleitung, an die die enzelnen Telekommunikationsgeräte angeschlossen sind, verfügbaren Übertragungskanälen und verbleiben insoweit im Bereich der Übertragung und allenfalls einer dezentralen Vermittlung, lassen aber Probleme einer zentralen Vermittlung unberührt. Gerade eine zentrale Vermittlung in einem Telekommunikationssystem sowohl für Stream-Verkehr, insbesondere zwischen Geräten zur Sprach-, Text-, und/oder Bildkommunikation, als auch für Burst-Verkehr, insbesondere zwischen Geräten zur Daten- und/oder Textverarbeitung,

mit breitbandigen, insbesondere Lichtwellenleiter-Anschlußleitungen ermöglicht aber die Erfindung dadurch, daß eine Mehrzahl von Telekommunikationsgeräten für Stream-Verkehr und Telekommunikationsgeräten für Burst-Verkehr jeweils über eine eigene Anschlußleitung oder auch über eine jeweils eine Mehrzahl solcher Telekommunikationsgeräte zusammenfassende Ring-oder Busanschlußleitung an ein und dieselbe Koppeleinrichtung angeschlossen ist, wobei das Telekommunikationssystem so ausgestaltet ist, daß in der Koppeleinrichtung bei Reservierung wenigstens eines Übertragungskanals auf jeder Anschlußleitung, an die ein oder mehrere Burst-Verkehr-Telekommunikationsgerät(e) angeschlossen ist (sind), ausschließlich für Burst-Verkehrsverbindungen und Belegung ausschließlich solcher reservierter Übertragungskanäle durch Burst-Verkehrs-Verbindungen alle einem für Burst-Verkehre reservierten Übertragungskanal zugehörigen Koppeleinrichtungseingänge mit allen einem für Burst-Verkehr reservierten Übertragungskanal zugehörigen Koppeleinrichtungsausgängen permanent verbunden sind, während Verbindungen mit für Stream-Verkehr vorgesehenen Übertragungskanälen zugehörigen Koppeleinrichtungseingängen bzw. -ausgängen ebenso wie Verbindungen zwischen diesen lediglich für die Dauer des jeweiligen Kommunikationsvorgangs durchgeschaltet werden.

Die Erfindung bringt den Vorteil mit sich, über ein und dieselbe Koppeleinrichtung und damit in einem gemeinsamen kanalorientierten Anschlußnetz Telekommunikation beider Kommunikationskategorien bzw. Verkehrsarten abwickeln zu können, wobei die Anschlußleitungen, die dabei eine beliebige Netzkonfiguration aufweisen können, jeweils im Multiplex, insbesondere im Zeitmultiplex, oder auch im Einfachbetrieb genutzt sein können.

In weiterer Ausgestaltung der Erfindung kann an die Koppeleinrichtung außeredem mindestens ein Anpassungs-Operationsmodul zur Prozedur- und ggf. Adressenanpassung zwischen den beiden Verkehrsarten Burst-Verkehr und Stream-Verkehr angeschlossen sein. Dies ermöglicht es, auch Verbindungen zwischen Anschlußstellen unterschiedlicher Verkehrskategorie und ggf. auch unterschiedlichen Nummerierungsschemas miteinander zu verbinden; zugleich genügt es bei einer solchen Transparenz zwischen Burst-Verkehr und Stream-Verkehr, etwaige zusätzliche Dienste und Leistungsmerkmale lediglich im Bereich einer der beiden Verkehrskategorien zu realisieren und sie dennoch für beide Verkehrsarten zur Verfügung zu haben.

Anhand zer Zeichnung sei die Erfindung noch nähmer erläutert. Dabei zeigt

Fig. 1 schematisch ein Ausführungsbeispiel eines Telekommunikationssystems gremäß der Erfindung;

Fig. 1a und Fig. 1b dienen der Erläuterung zweier Schaltungseinzelheiten in Fig. 1.

Fig. 2 verdeutlicht die Reservierung von Zeitkanälen.

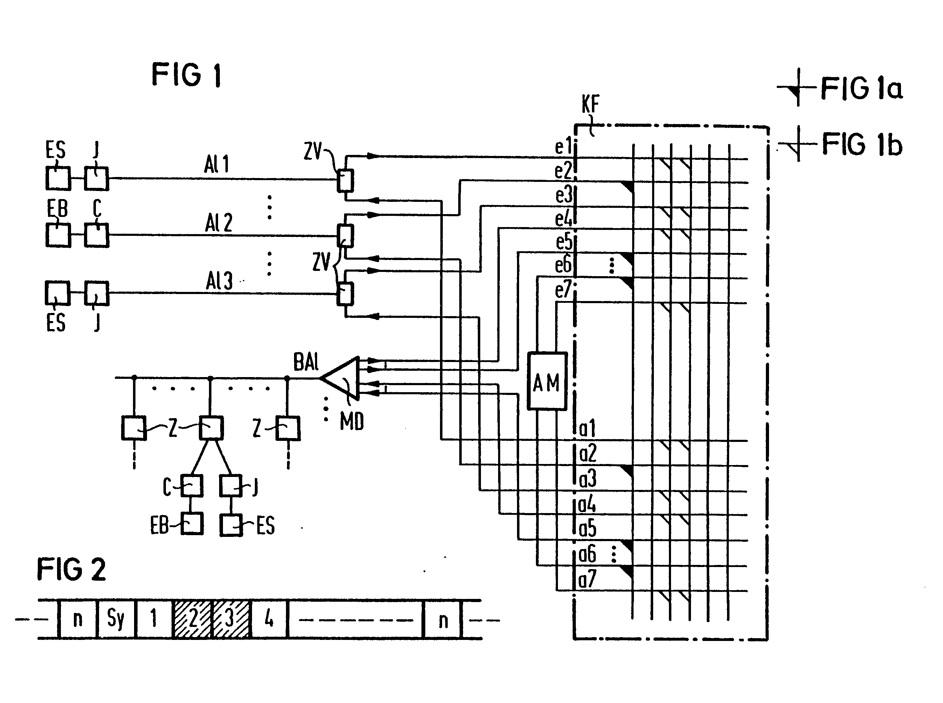

In der Zeichnung Fig. 1 ist schematisch in einem zum Verständnis der Erfindung erforderlichen Umfange ein Telekommunikationssystem gemäß der Erfindung dargestellt. Dieses Telekommunikationssystem weist zum einen Telekommunikationsgeräte ES für sog. Stream-Verkehr auf, beispielsweise Telefon-, Text-, und/oder Bildkommunikationsendgeräte; zum anderen weist das Telekommunikationssystem gemäß Fig. 1 Telekommunikationsgeräte EB für sog. Burst-Verkehr auf, beispielsweise Datenverarbeitungseinrichtungen und Büroarbeitsplatzgeräte. Die Telekommunikationsgeräte ES für Stream-Verkehr sind jeweils — im vorliegenden Fall über eine Interfaceschaltung J — über eine eigene Anschlußleitung AI1 ... AI3 oder auch über eine jeweils eine Mehrzahl von Telekommunikationsgeräten zusammenfassende Busandschlußleitung BAI an eine Koppeleinrichtung KF angeschlossen, an die außerdem auch die Telekommunikationsgeräte EB für Burst-Verkehr jeweils — im vorliegenden Fall über eine Steuerschaltung C für den Burst-Verkehr — uber eine eigene Anschlußleitung wie beispielsweise die Anschlußleitung AI2 oder auch über eine jeweils eine Mehrzahl von Telekommunikationsgeräten zusammenfassende Busanschlußleitung BAI angeschlossen sind.

Die Multiplexausnutzung der Busanschlußleitung BAI ist in Fig. 2 angedeutet: In einem n Zeitkanäle Sy, 1, ... n umfassenden Zeitmultiplexsystem mögen neben einem Synchronisationskanal Sy zum einen Zeitkänale, 1, 4, ... n vorgesehen sein, die in in der Zeitmultiplextechnik üblicher Weise jeweils einer Verbindung zwischen zwei Telekommunikationsanschlüssen für Stream-Verkehr zugeordnet werden können; zum anderen sind beispielsweise zwei in Fig. 2 durch Schraffur besonders hervorgehobene Zeitkanäle 2, 3 vorgeshen, die ausschließlich für Burst-Verkehrsverbindungen zwischen Telekommunikationsgeräten EB für Burst-Verkehr reserviert sein mögen. Wie in Fig. 1 angedeutet ist, kann das jeweils zeitrichtige Anschlten der einzelenen Telekommunikationsanschlüsse an die Busanschluß-leitungen BAI durch entsprechende Zugriffs-schaltungen Z bewirkt werden. Sofern die geforderte Bandbreite die Mehrfachausnutzung eines Übertragungsweges ausschließt, müssen die betreffenden Telekommunikationsgeräte über individuelle Anschlußleitugen an die Koppeleinrichtung KF angeschlossen sein; dies kann z.B. bei Digitalkommunikation mit 64 oder auch 160 kbit/s über Cu-Doppelader-Anschlußleitungen AI oder bei Bildfernsprechen über Lichtwellenleiter-Anschlußleitungen AI der Fall sein. Bei Verzicht auf die Ausnutzung der vollen Übertragungskapazität können aber auch in anderen Fällen individuelle Anschlußleitungen vorgesehen sein.

Die so gebildeten Einfach- oder Mehrfachkanäle konstanter Bitrate sind dann, wie schon gesagt, an die Koppeleinrichtung KF angeschlossen, die diese Bitrate vermitteln kann. In Fig. 1 ist dazu angedeutet, daß die geräteindividuellen Anschlußleitungen AI über eine Zweidraht-Vierdraht-Übergang ZV geführt sein können und daß die Busanschlußleitung BAI über einen Miltiplexer/Demultiplexer MD geführt ist; in der Koppeleinrichtung KF sind dementsprechend die jeweiligen Übertragungskanäle getrennt dargestellte.

In der Koppeleinrichtung KF sind nun alle diejenigen Koppeleinrichtung seingänge, die einem für Burst-Verkehr reservierten Übertragungskanal zugehörig sind, permanent mit allen denjenigen Koppeleinrichtungsausgängen verbunden, die einem für Burst-Verkehr reservierten Übertragungskanal zugehörig sind. In dem in Fig. 1 skizzierten Ausführungsbeispiel sind solche Koppeleinrichtungseingänge/-ausgänge beispielsweise der mit der individuellen Burst-Verkehrs-Anschlußleitung AI2 verbundene Eingang/Ausgang e2/a2 und der Eingang/Ausgang e5/a5, der einem auf der Busanschlußleitung BAI für Burst-Verkehr reservierten Übertragungskanal zugehören möge; die permanente Verbindung zwischen allen diesen Koppeleinrichtungseingängen und -ausgängen verläuft dabei über ständig durchgeschaltete Koppelpunkte, die in Fig. 1 durch das in Fig. 1a dargestellte Schaltzeichen angedeutet sind. Eine weitere ständige Verbindung besteht zu/von einem ebenfalls an die Koppeleinrichtung KF angeschlossenen Anpassungs-Operationsmodul AM zur Prozedur- und ggf. Addressenanpassung zwischen den beiden Verkehrsarten Burst-Verkehr und Stream-Verkehr.

Verbindungen zwischen dem Anpassungs-Operationsmodul AM und solchen Koppeleinrichtung seingängen bzw. -Ausgängen, die für Stream-Verkehr vorgesehenen Übertragungskanälen zugehören, werden ebenso wie Verbindungen zwischen solchen Koppeleinrichtungseingängen und -ausgängen lediglich für die Dauer des jewei-ligen Kommunikationsvorganges durch-geschaltet. In dem in Fig. 1 skizzierten Ausführungsbeispiel sind solche Koppeleinrichtungseingänge/-ausgänge beispielsweise die mit individuellen Stream-Verkehrs-Anschlußleitungen AI1 bzw. AI3 verbundenen Eingänge/ Ausgänge e1/a1 und e3/a3 sowie der Eingag/ Ausgang e4/a4, der einem auf der Busanschlußleitung BAI für Stream-Verkehr verfügbaren Übertragungskanal zugehören möge; die jeweils lediglich für die Dauer des jeweiligen Kommuni-kationsvorgangs bestehenden Verbindungen ver-laufen dabei über jeweils nur für die Verbindungsdauer durchgeschaltete Koppelpunkte, die in Fig. 1 durch das in Fig. 1b dargestellte Schaltzeichen angedeutet sind. Eine weitere derartige Verbindung besteht auch zu/von dem Anpassungs-Ope-rationsmodul AM über den Koppeleinrichtung-seingang/ausgang e7/a7.

### Patentansprüche

1. Telekommunikationssystem sowohl für sog. Stream-Verkehr, insbesondere zwischen Geräten zur Sprach-, Text- und/oder Bildkommunikation, als auch für sog. Burst-Verkehr, insbesondere zwischen Geräten zur Daten- und/oder Textverarbeitung, mit vorzugsweise breitbandigen, insbesondere Lichtwellenleiter-Anschlußleitungen, dadurch gekennzeichnet, daß eine Mehrzahl von Telekommunikationsgeräten (ES) für Stream-Verkehr und von Telekommunikationsgeräten (EB) für Burst-Verkehr jeweils über eine eigene Anschlußleitung (AI) oder auch über eine jeweils eine Mehrzahl solcher Telekommunikationsgeräte (ES, EB) zusammenfassende Ring-oder Busanschlußleitung (BAI) an ein und dieselbe Koppeleinrichtung (KF) angeschlossen ist, wobei das Telekommunikationssystem so ausgestaltet ist, daß in der Koppeleinrichtung bei Reservierung wenigstens eines Übertragungskanals (2, 3) auf jeder Anschlußleitung (BAI), an die ein oder mehrere Burst-Verkehr-Telekommunikationsgerät(e) (EB) angeschlossen ist (sind) ausschließlich für Burst-Verkehrsverbindungen und Belegung ausschließlich solcher reservierter Übertragungskanäle durch Burst-Verkehrsverbindungen alle einem für Burst-Verkehr reservierten Übertragungskanal zugehörigen Koppeleinrichtungseingänge (e2, e5) mit allen einem für Burst-Verkehr reservierten Übertragungskanal (2, 3) zugehörigen Koppeleinrichtungtungsausgängen (a2, a5) permanent verbunden sind, während Verbindungen mit für Stream-Verkehr vorgesehenen Übertragungskanälen (1, 4) zugehörigen Koppeleinrichtungseingängen (e1, e3, e4) bzw. -ausgängen (a1, a3, a4) ebenso wie Verbindungen zwischen diesen Ein- und Ausgängen lediglich für die Dauer des jeweiligen Kommunikationsvorganges durchgeschaltet werden.

2. Telekommunikationssystem nach Anspruch 1, dadurch gekennzeichnet, daß an die Koppeleinrichtung (KF) außerdem mindestens ein Anpassungs-Operationsmodul (AM) zur Prozedur- und ggf. Adressenanpassung zwischen den beiden Verkehrsarten angeschlossen ist.

### Revendications

1. Système de télécommunications aussi bien pour ce qu'on appelle le trafic en mode continu, notamment entre des appareils pour la transmission de signaux vocaux, de textes et/ou d'images, qui pour ce qu'on appelle le trafic en mode paquet, notamment entre les appareils utilisés pour le traitement de données et/ou de textes, comportant des lignes de raccordement de préférence à large bande, notamment des lignes de raccordement en forme de guides d'ondes optiques, caractérisé par le fait qu'une multiplicité d'appareils de télécommunications (ES) pour le trafic en mode continu et d'appareils de télécommunications (EB) pour le trafic en mode paquet sont raccordés à un même dispositif de couplage (KF), respectivement par l'intermédiaire d'une ligne particulière de raccordement (AI) ou même par l'intermédiaire d'un ligne de raccordement en anneau ou formant (BAI) réunissant respectivement une multiplicité de tels appareils de télécommunications (ES, EB), le système de télécommunications étant agencé de telle sorte que, dans le dispositif de couplage, dans le cas de la mise en réserve d'au moins un canal de transmission (2, 3) dans chaque ligne de raccordement (BAI), à laquelle sont raccordés on ou plusieurs appareils de télécommunications (EB) pour le trafic en mode paquet, exclusivement pour des liaisons en mode paquet, et de l'occupation exclusivement de tels canaux de transmission réservés par des liaisons de trafic en mode paquet, toutes les entrées (e2, e5) du dispositif de couplage, associées à un canal de transmission réservé pour le trafic en mode paquet, sont reliées en permanence à toutes les sorties (a2, a5) du dispositif de couplage, associées à un canal de transmission (2, 3) réservé pour le trafic en mode paquet, tandis que des liaisons avec des entrées (e1, e3, e4) ou des sorties (a1, a3, a4) du dispositif de couplage, associées à des canaux de transmission (1, 4) prévus pour le trafic en mode continue, ainsi que des liaisons entre ces entrées et sorties, sont interconnectées uniquement pendant la durée de l'opération respective de communciations.

2. Système de télécommunications suivant la revendication 1, caractérisé par le fait qu'au dispositif de couplage (KF) est en outre raccordé au moins un module opérationnel d'adaptation (AM) permettant une adaptation de procédures ou éventuellement une adaptation d'adresses entre les deux types de trafic.

**Claims**

1. Telecommunications system for so-called stream traffic, particularly between devices for voice, text and/or picture communication, and for so-called burst traffic, particularly between devices for data and/or text processing, with preferably wide-band, particularly optical waveguide subscriber lines, characterized in that a plurality of telecommunications devices (ES) for stream traffic and of telecommunications devices (EB) for burst traffic is in each case connected via a separate access line (AI) or also via a ring or bus access line (BAI) in each case combining a plurality of such telecommunication devices (ES, EB) to one and the same switching device (KF), the telecommunications system being structured in such a manner that in the switching device, in the case of booking at least one transmission channel (2, 3) on each access line (BAI), to which one or more burst traffic telecommunication device(s) (EB) is (are) connected, exclusively for burst traffic connections and seizing of exclusively such booked transmission channels by burst traffic connections, all switching device inputs (e2, e5) associated with a transmission channel booked for burst traffic, are permanently connected to all switching device outputs (a2, a5) associated with a transmission channel (2, 3) booked for burst traffic whilst connections to switching device inputs (e1, e3, e4) and outputs (a1, a3, a4) assoiciated with transmission channels (1, 4) provided for stream traffic, and connections between these inputs and outputs, are only switched through for the duration of the respective communications process.

2. Telecommunications system according to Claim 1, characterized in that, in addition, at least one adaptation-type operation module (AM) is conected to the switching device (KF) for procedure and, if necessary, address adaptation between the two types of traffic.

# FIG 1

EP 0 126 413 B1

# FIG 2